# FASCICULE DE BREVET EUROPEEN

(11) **EP 2 798 398 B1**
(45) Date de publication et mention de la délivrance du brevet: **17.08.2016**
(21) Numéro de dépôt: 12824696.4
(22) Date de dépôt: 26.12.2012
(51) Int. Cl.: G02F 1/13, G02F 1/1334, G02F 1/137, G02F 1/1345

(54) **VITRAGE MULTIPLE A DIFFUSION VARIABLE PAR CRISTAUX LIQUIDES**
MEHRFACHVERGLASUNG MIT VARIABLER TRÜBUNG DURCH FLÜSSIGKRISTALLE
MULTIPLE GLAZING HAVING VARIABLE DIFFUSION BY LIQUID CRYSTALS

(30) Priorité: 29.12.2011 FR 1162549
(43) Date de publication de la demande: 05.11.2014
(73) Titulaire: Saint-Gobain Glass France, 92400 Courbevoie (FR)
(72) Inventeur: ZHANG, Jingwei, F-91300 Massy (FR)
(74) Mandataire: Ribeaudeau, Marion Christine
(86) Numéro de dépôt international: PCT/FR2012/053083
(87) Numéro de publication internationale: WO 2013/098522

(56) Documents cités:
- WO-A1-98/05998
- WO-A1-2012/045973
- DE-A1- 3 402 518
- US-A- 5 142 644

## Description

L'invention se rapporte au domaine des vitrages électrocommandables à propriétés optiques variables et plus particulièrement concerne un vitrage multiple à diffusion variable par cristaux liquides, doté d'une couche de cristaux liquides entre deux verres et alternant de manière réversible par application d'un champ électrique alternatif entre un état transparent et un état translucide.

On connaît des vitrages dont certaines caractéristiques peuvent être modifiées sous l'effet d'une alimentation électrique appropriée, tout particulièrement la transmission, l'absorption, la réflexion dans certaines longueurs d'ondes du rayonnement électromagnétique, notamment dans le visible et/ou dans l'infrarouge, ou encore la diffusion lumineuse.

Le vitrage électrocommandable à cristaux liquides peut être utilisé partout, tant dans le secteur de la construction que dans le secteur de l'automobile, chaque fois que la vue à travers le vitrage doit être empêchée à des moments donnés.

Le document WO9805998 divulgue un vitrage multiple à cristaux liquides comportant :
- deux feuilles de verre flotté (« float » en anglais) d'1 m² et épaisses de 6 mm scellées sur le bord de leurs faces internes par un joint adhésif de scellement en résine époxy,
- deux électrodes en couches électriquement conductrices à base de SnO₂ : F directement sur les faces internes de verre,
- directement sur les électrodes, une couche de cristaux liquides à base de PSCT (« Pofymer Stabilized Cholesteric Texture » en anglais) de 15 µm, incorporant des espaceurs sous forme de billes de verre.

Lors de l'assemblage, les deux feuilles de verres sont décalées laissant des bords opposés d'électrodes saillants afin de faciliter l'application des bandes de cuivre adhésivées pour distribuer le courant aux électrodes.

On constate toute fois que ce vitrage multiple à cristaux liquides n'est pas nécessairement pérenne.

US 5 142 644 A divulgue un vitrage multiple à diffusion variable par cristaux liquides, avec un chant, le vitrage multiple présentant :
- une première feuille de verre avec une face dite première face interne et une autre face dite première face externe et une tranche dite première tranche,
- une deuxième feuille de verre avec une face dite deuxième face interne et une autre face dite deuxième face externe et une tranche dite deuxième tranche,
- des première et deuxième électrodes respectivement sur les première et deuxième faces internes, sous forme de couches électriquement conductrices transparentes, première et deuxième électrodes dotées respectivement de première et deuxième zones d'alimentation électrique,
- et, sur les première et deuxième électrodes, une couche de cristaux liquides dans une matière polymétrique alternant de manière réversible entre un état transparent et un état translucide par application d'un champ électrique alternatif,
- la première feuille de verre dépassant d'un bord de la deuxième tranche, par un premier bord de la première face interne, dit premier bord dépassant, et comportant la première zone d'alimentation électrique,
- un câblage électrique.

DE 34 02 518 A1 D2 dévoile un vitrage feuilleté comportant un fil chauffant ou faisant office d'antenne et comportant une connexion électrique robuste. Cette connexion comporte un câble avec une entrée de câble et une résine. Les deux feuilles de verre ne sont pas décalées. Au contraire, DE 34 02 518 A1 D2 propose de localiser la connexion électrique entre les deux feuilles de verre et d'améliorer la robustesse de cette connexion électrique en collant la connexion électrique entre les deux feuilles de verre par ladite résine.

La présente invention a pour but d'améliorer la fiabilité du vitrage à diffusion variable par cristaux liquides, à moindre coût, de façon simple et à long terme.

A cet effet, la présente invention propose un vitrage multiple à diffusion variable par cristaux liquides, avec un chant, ledit vitrage présentant :
- une première feuille de verre avec une face principale dite première face interne et une autre face principale dite première face externe (opposée à la face interne) et une tranche dite première tranche,
- une deuxième feuille de verre avec une face principale dite deuxième face interne et une autre face principale dite deuxième face externe (opposée à la face interne) et une tranche dite deuxième tranche,
   les première et deuxième feuilles de verre, notamment flottées, étant maintenues par un joint dit de contact,
- des première et deuxième électrodes respectivement sur les première et deuxième faces internes, sous forme de couches électriquement conductrices transparentes, première et deuxième électrodes dotées respectivement de première et deuxième zones d'alimentation électrique,
- et, sur les première et deuxième électrodes, une couche de cristaux liquides dans une matière polymérique (ou une matrice polymérique), couche de cristaux liquides alternant de manière réversible entre un état transparent et un état translucide par application d'un champ électrique alternatif, couche ayant une épaisseur comprise entre 5 et 15 µm en incluant 5 µm et excluant 15 µm, de préférence de 8 µm voire de 10µm à 14 µm, et couche incorporant des espaceurs, de préférence sphériques, transparents, notamment en plastique,
- la première feuille de verre dépassant d'un bord de la deuxième tranche, par un premier bord (principal) de la première face interne, dit premier bord dépassant, et comportant la première zone d'alimentation électrique,
- un câblage électrique avec une première entrée de câblage qui est l'âme d'un premier câble, donc une zone de câble sans gaine, dans la première zone d'alimentation électrique et une deuxième entrée de câblage qui est l'âme d'un câble, donc une zone de câble sans gaine, dans la deuxième zone d'alimentation électrique,
- une première matière d'isolation électrique isolant électriquement la première entrée de câblage, étant une matière polymérique, et éventuellement une deuxième matière d'isolation électrique isolant électriquement la deuxième entrée de câblage, étant une matière polymérique, identique ou distincte de la première.

La première matière d'isolation électrique renforce la tenue mécanique et le maintien de l'entrée de câblage sur le verre, sécurise le vitrage à cristaux liquides. Elle peut être protégée mécaniquement aussi par un troisième verre au-dessus de la première feuille de verre et dépassant à cet effet.

L'installation du vitrage à cristaux liquides est facilitée notamment lorsque le vitrage à cristaux liquides est glissé dans un dormant.

Le vitrage à cristaux liquides est donc à la fois plus résistant mécaniquement et sécurisé électriquement.

La première matière d'isolation électrique peut couvrir de préférence complètement le premier bord dépassant.

Le diamètre de l'entrée de câblage peut être d'au moins 0,3 mm, voire d'au moins 1 mm. La largeur du premier bord dépassant peut être d'au moins 3 mm, voire d'au moins 10 mm. Les feuilles de verre de préférence sont de même forme (courbes ou à coins).

Pour renforcer encore la robustesse du vitrage à cristaux liquides, on cherche à protéger le premier câble avant son raccord au secteur (ou toute autre alimentation électrique).

Ainsi, notamment au lieu de le faire courir le long du chant du vitrage, le câblage électrique comprend un premier câble électrique comportant la première entrée de câblage et qui sur au moins une partie de sa longueur située au-delà de la première entrée du câblage, notamment comportant au moins une gaine (la gaine interne voire la gaine externe classique du câble), est (posé voire figé) le long du premier bord dépassant éventuellement couvert par un troisième verre, et/ou dans une autre zone dépassante de la première feuille de verre voire d'un troisième verre.

Cela forme un guidage des câbles et une protection.

Le câble peut affleurer de la première feuille ou être entièrement sur le premier bord dépassant (ou tout autre bord dépassant).

Cela permet en outre d'avoir un vitrage plus compact, d'éviter une surépaisseur locale.

On peut envisager diverses configurations de câblage (un ou plusieurs câbles) le long d'un seul bord (latéral ou longitudinal) du vitrage ou sur deux bords adjacents ou opposés du vitrage.

On peut en outre souhaiter immobiliser le câblage électrique -sur le premier bord dépassant ou de tout autre bord dépassant et/ou contre la tranche de la première feuille - et éviter son arrachement.

Aussi, le câblage électrique peut comprendre un premier câble électrique comportant la première entrée de câblage et qui sur au moins une partie de sa longueur située au-delà de la première entrée du câblage comporte une gaine, notamment la gaine interne, recouverte par une matière polymérique de maintien, (voire en contact direct), matière notamment étanche à l'eau liquide voire vapeur et/ou isolante électrique, de préférence identique voire formant la première matière d'isolation électrique, et la gaine étant de préférence figée par la matière de maintien (gaine de préférence immergée dans la matière de maintien).

On choisit une matière de maintien polymérique suffisamment adhérente à la gaine et adhérente au verre, par exemple thermoplastique.

L'EVA, pour copolymère éthylène/acétate de vinyle, a par exemple une bonne adhésion avec le verre et à une gaine en polychlorure de vinyle (PVC) contrairement à une gaine fluorée (le téflon etc).

Cette matière de maintien polymérique peut être une colle. On peut choisir du silicone aussi.

L'épaisseur de la matière de maintien polymérique est par exemple sensiblement égale au diamètre du câble, par exemple de l'ordre de 5 mm, notamment si le câble est le long du chant du vitrage.

Si une longueur de câblage électrique est contre le chant du vitrage, la matière de maintien fixe cette longueur de câblage contre le chant.

Si une longueur de câblage électrique est sur le premier bord dépassant (ou sur tout autre bord dépassant), cette matière de maintien peut remplir complètement le bord dépassant au moins sur sa partie plus externe que le câble.

Cette matière de maintien améliore encore la tenue mécanique et le positionnement du câble, facilite l'installation du vitrage notamment lorsque le vitrage est glissé dans un dormant.

De préférence, le câblage est recouvert tout le long du vitrage par cette matière (avant sa sortie pour raccordement au secteur).

Il est en outre possible de masquer le câblage par la matière de maintien choisie opaque par exemple d'un blanc laiteux par ajout si nécessaire d'additifs dans la matière de maintien.

De manière avantageuse, le câblage électrique peut comporter un premier câble électrique comportant la première entrée de câblage et étant fixé dans une position déterminée unidirectionnelle, notamment linéaire, notamment le long du chant ou du premier bord dépassant du vitrage, en sortie du vitrage voire à partir du dehors de la première entrée de câblage avec la première matière d'isolation électrique.

Le caractère unidirectionnel peut être facilité :
- par la première matière d'isolation électrique qui peut initier une direction privilégiée dès la zone d'entrée de câblage,
- et/ou par la matière de maintien figeant le câble,
- et/ou par son placement sur le premier bord dépassant.

On préfère ainsi ne pas former de U (et de préférence de L), même après branchement avec l'alimentation électrique générale (secteur ...).

Cela évite ainsi toute détérioration du câble par pliage, lors du transport, ou de l'installation, comme de la désinstallation (réparation etc).

Aussi, dans une première configuration unidirectionnelle, le câblage électrique comprend un (seul) premier câble dont l'entrée est au niveau du bord susceptible d'être, après montage du vitrage, le bord supérieur ou respectivement inférieur (position par rapport au sol) du vitrage, à partir du dehors de la première entrée de câblage avec la première matière d'isolation électrique, ce premier câble est unidirectionnel, vers l'alimentation électrique (générale), notamment au plafond ou respectivement au sol.

Aussi, dans une deuxième configuration unidirectionnelle (alternative ou cumulative), le câblage électrique comprend un (seul) premier câble dont l'entrée est au niveau du bord susceptible d'être, après montage du vitrage, le bord latéral du vitrage, à partir du dehors de la première entrée de câblage avec la première matière d'isolation électrique, le câble est unidirectionnel.

Dans un vitrage à coins, le bord latéral est vertical après montage, et peut être indifféremment plus long, égal ou plus court que le bord horizontal.

De préférence, le câble suit un seul bord.

Pour simplifier le raccordement, de préférence le câblage électrique peut sortir du vitrage, notamment sans couverture par la première matière d'isolation électrique, dans une unique zone, notamment une zone d'un seul bord du chant, et de préférence le câblage est constitué d'un unique premier câble électrique qui est bi-brins.

Pour étendre la protection électrique et mécanique du vitrage, la première zone d'alimentation électrique peut comprendre une première amenée de courant sur laquelle est fixée la première entrée de câblage et qui est protégée par la première matière d'isolation électrique.

La première amenée de courant (couramment appelé « bus bar ») est par exemple une bande électroconductrice sous forme d'un clinquant souple en cuivre fixée sur la première électrode le long du bord.

Pour fiabiliser encore le vitrage, il peut comprendre un joint d'étanchéité à l'eau liquide, voire vapeur, notamment externe au joint de contact et formé par une matière polymérique d'étanchéité, notamment isolante électrique, le joint d'étanchéité étant agencé pour l'étanchéité de la première entrée de câblage, et de préférence d'une éventuelle première amenée de courant, et (sur tout ou partie) de la première électrode notamment dans la zone extérieure au joint de contact.

La matière polymérique d'étanchéité selon l'invention adhère suffisamment aux verres. Il n'est pas non plus nécessaire de rajouter de couche(s) (mince(s)) d'accrochage sur la surface de(s) verre(s) pour renforcer l'adhésion.

La matière polymérique d'étanchéité garantit donc l'étanchéité à l'eau liquide, voire même vapeur, notamment très stricte dans les milieux humides (salle de bain, etc).

Comme applications en zone humide (inondable etc), on peut citer :
- une pièce d'eau (séparée ou faisant partie d'une chambre ou tout autre pièce), une laverie, une buanderie, dans une salle de bains, une douche, notamment comme sol, paroi, cloison, porte (éventuellement coulissante), fenêtre de façade ou fenêtre intérieure,
- une piscine, dalle (de sol), paroi (murale), fenêtre, cabine d'essayage,
- une façade de bâtiment (vitrine, fenêtre notamment en rez-de-chaussée, de jardin) dans les zones inondables etc,
- un vitrage de signalisation routière, urbaine ou côtière, dans les zones inondables etc, dans une rue proche ou en bord de mer, d'une rivière, d'un fleuve... ,
- un bateau.

Dans une conception préférée, la matière d'étanchéité forme en outre la première matière d'isolation électrique.

Le joint d'étanchéité peut être le long d'au moins un bord de la première tranche et/ou le long du premier bord dépassant.

De préférence, le joint d'étanchéité à l'eau liquide, voire vapeur est en outre agencé pour l'étanchéité de la deuxième entrée de câblage, et de préférence d'une éventuelle amenée de courant de la deuxième électrode et (sur tout ou partie) de la deuxième électrode dans la zone extérieure au joint de scellement.

Dans une conception avantageuse, pour garantir l'étanchéité complète du vitrage à cristaux liquides, le joint d'étanchéité à l'eau est sur tout le pourtour du vitrage notamment:
- est contre le chant du vitrage, notamment pour une protection des coins de feuille(s) de verre,
- et/ou le long du premier bord dépassant, notamment pour éviter une surépaisseur locale (et une épaisseur de joint sur le chant).

Le joint d'étanchéité à l'eau peut border, voire couvrir éventuellement le câblage électrique, la matière d'étanchéité pouvant notamment être la matière de maintien déjà évoquée, notamment l'EVA.

Le vitrage est en particulier doté du joint d'étanchéité à l'eau peut être exempt d'un entourage externe notamment opaque (cadre rigide, baguette, menuiserie...).

Le joint d'étanchéité à l'eau peut procurer une finition satisfaisante nécessaire pour les installations de vitrages bord à bord et les installations du vitrage en porte. Par ailleurs, le joint peut amortir les chocs, notamment protéger les coins de vitrage.

On peut préférer une matière d'étanchéité transparente, comme par exemple l'EVA, notamment si le joint d'étanchéité est visible, par exemple dans les applications de porte.

La largeur (section transversale) du joint d'étanchéité à l'eau liquide n'est pas forcément identique sur tout le pourtour.

Pour la première matière d'isolation électrique et/ou la matière d'étanchéité et/ou une matière de maintien du câblage électrique, on choisit une matière adhérente au verre, par exemple thermoplastique.

La première matière d'isolation électrique et/ou la matière d'étanchéité du joint qui forme éventuellement la première matière d'isolation électrique et/ou la matière de maintien du câblage électrique peut être avantageusement transformée (c'est-à-dire mise en forme, notamment par ramollissement, collage, liquéfaction et de préférence réticulation) par cycle thermique notamment en étuve ou par simple chauffage. Cette transformation est préférable :
- à une extrusion, lourde à mettre en oeuvre en production sans garantie d'adhésion au verre,
- ou encore à l'usage d'une colle thermofusible (« hot melt adhesive » en anglais) appliquée à chaud avec un pistolet, sans garantie d'adhésion au verre.

La première matière d'isolation électrique peut être en éthylène-vinyl acétate (matière moulable) ou encore en silicone, notamment pour fournir une étanchéité à l'eau liquide voire vapeur.

La première matière d'isolation électrique peut aussi être enfin en résine thermodurcissable, notamment résine époxy, utilisant de préférence la même matière que le joint de contact et fournissant également l'étanchéité à l'eau liquide, voire vapeur.

La première matière d'isolation électrique peut être en polyuréthane ou polystyrène (qui sont moulables) ou encore en polyvinylbutyral ou résine ionomère, sans toutefois fournir une fonction d'étanchéité à l'eau.

On peut aussi choisir toutes ces matières (éthylène-vinyl acétate, silicone, résine époxy, polyuréthane, polystyrène, polyvinylbutyral, résine ionomère) pour la matière de maintien du câblage électrique.

De manière préférée, la matière d'étanchéité qui forme éventuellement la première matière d'isolation électrique et/ou qui forme éventuellement une matière de maintien du câblage électrique est réticulée, notamment former un réseau tridimensionnel pour renforcer l'étanchéité à l'eau liquide, voire vapeur.

De manière préférée, la première matière d'isolation électrique et/ou la matière d'étanchéité et/ou une matière de maintien du câblage électrique peut être en silicone ou à base d'éthylène-vinyl acétate, notamment réticulée par des agents tels que du peroxyde organique.

L'EVA en particulier adhère bien au verre comme déjà indiqué.

La première matière d'isolation électrique et/ou la matière d'étanchéité du joint qui forme éventuellement la première matière d'isolation électrique et/ou une matière de maintien du câblage électrique peut présenter une surface dite externe, orientée vers l'extérieur du vitrage, qui est moulée.

La surface externe peut être plane, lisse ou volontairement rainurée, dentelée. Elle peut former un profilé notamment pour une économie de matière, en étant bombée vers l'extérieur par exemple.

Le premier bord dépassant peut être obtenu par décalage des première et deuxième tranches ou par découpe partielle de la deuxième tranche.

La deuxième feuille de verre peut dépasser d'un bord de tranche de la première feuille de verre, par un bord de la deuxième face interne dit autre bord dépassant, comportant la deuxième zone d'alimentation électrique, et le vitrage comprend une deuxième matière d'isolation électrique de la deuxième entrée de câblage, polymérique, identique ou distincte de la première matière d'isolation électrique.

Le premier bord dépassant peut s'étendre sur une partie limitée du premier bord de la première face interne, le dépassement étant obtenu par une découpe partielle de la deuxième tranche. Et de préférence la deuxième feuille de verre peut dépasser d'un bord de la première tranche, par un bord de la deuxième face interne dit autre bord dépassant, comportant la deuxième zone d'alimentation électrique, et s'étendant sur une partie limitée d'un bord de la deuxième face interne, le dépassement étant obtenu par une découpe partielle de la première tranche, et de préférence le premier bord dépassant et l'autre bord dépassant sont sur un même bord du vitrage.

On simplifie ainsi encore le vitrage à cristaux liquides en formant des première et deuxième zones d'alimentation électrique rapprochées et/ou en outre cela peut limiter la longueur de câblage nécessaire. On laisse toutefois un espace suffisant entre elles pour éviter un échauffement des liaisons entrées de câbles - parties externes, par exemple par soudure.

De préférence les extrémités des première et deuxième entrées de câblage sont espacées d'une longueur dite de séparation, mesurée suivant le plan principal du vitrage, supérieure ou égale à 10 cm, voire supérieure ou égale à 15 cm, notamment inférieure à 30 cm.

Par exemple, pour rapprocher les entrées de câblage et les éventuelles amenées de courant sur le même bord du vitrage à coins (rectangulaire, carré...), on coupe chacune de première et deuxième feuilles de verre sur la moitié de la largeur de ce bord.

Par ailleurs, les espaceurs peuvent être de préférence en une matière plastique transparente. Les espaceurs déterminent (grossièrement) l'épaisseur de la couche de cristaux liquides. On préfère par exemple des espaceurs en polyméthacrylate de méthyle (PMMA).

Les espaceurs sont de préférence en matière d'indice optique (sensiblement) égal à l'indice optique de (la matrice de) la couche de cristaux liquides.

La couche de cristaux liquides peut être à base de cristaux liquides de différents types.

Pour les cristaux liquides, on peut en effet utiliser tous les systèmes à cristaux liquides connus sous les termes de « NCAP » (Nematic Curvilinearly Aligned Phases en anglais) ou « PDLC » (Polymer Dispersed Liquid Cristal en anglais) ou « CLC » (Cholesteric Liquid Cristal en anglais) ou « NPD-LCD » (Non-homogenous Polymer Dispersed Liquid Crystal Display en anglais).

Ceux-ci peuvent en outre contenir des colorants dichroïques, notamment en solution dans les gouttelettes de cristaux liquides. On peut alors conjointement moduler la diffusion lumineuse et l'absorption lumineuse des systèmes.

On peut également utiliser, par exemple, les gels à base de cristaux liquides cholestériques contenant une faible quantité de polymère réticulé, comme ceux décrits dans le brevet WO-92/19695. Plus largement, on peut donc choisir des « PSCT » (Polymer Stabilized Cholesteric Texture en anglais).

En particulier, on peut utiliser des cristaux liquides smectiques bistables, par exemple comme détaillé dans le brevet EP2256545, qui commutent sous l'application d'un champ électrique alternatif sous forme impulsionnelle et qui restent dans l'état commuté jusqu'à l'application d'une nouvelle impulsion.

Le système à cristaux liquides peut être discontinu, en plusieurs morceaux (par exemple de type pixels).

Dans des zones humides comme ailleurs, le vitrage selon l'invention peut être utilisé (aussi) :
- comme cloison interne (entre deux pièces ou dans un espace) dans un bâtiment, dans un moyen de locomotion terrestre, aérien, aquatique (entre deux compartiments, dans un taxi etc),
- comme porte vitrée, fenêtre, plafond, dallage (sol, plafond),
- comme vitrage latéral, toit d'un moyen de locomotion terrestre, aérien, aquatique,
- comme écran de projection,
- comme façade de magasin, vitrine notamment d'un guichet.

Et en abaissant l'épaisseur de la couche (et donc la quantité de mélange actif encapsulé) en dessous de 15 µm, on réduit le coût de matière

Naturellement, le vitrage selon l'invention peut former tout ou partie d'une cloison et autre fenêtre (type imposte etc).

D'autres détails et caractéristiques de l'invention apparaîtront de la description détaillée qui va suivre, faite en regard des dessins annexés sur lesquels :
- la figure 1a représente une vue en coupe transversale schématique d'un premier mode de réalisation du vitrage multiple à diffusion variable par cristaux liquides selon l'invention,
- la figure 1b représente une vue en coupe latérale schématique et partielle du vitrage multiple à diffusion variable par cristaux liquides de la figure 1,
- la figure 1c représente une vue schématique de dessus du vitrage multiple à diffusion variable par cristaux liquides de la figure 1a,
- la figure 1d représente une vue partielle et schématique en coupe transversale du vitrage multiple à diffusion variable par cristaux liquides de la figure 1a en cours de fabrication,
- la figure 2a représente une vue schématique de dessus d'un deuxième mode de réalisation du vitrage multiple à diffusion variable par cristaux liquides selon l'invention,
- la figure 2b représente une vue en coupe latérale schématique et partielle du vitrage multiple à diffusion variable par cristaux liquides de la figure 2a en cours de fabrication,
- la figure 2c représente une vue en coupe latérale schématique et partielle du vitrage multiple à diffusion variable par cristaux liquides de la figure 2a,
- la figure 3a représente une vue schématique de dessus d'un troisième mode de réalisation du vitrage multiple à diffusion variable par cristaux liquides selon l'invention,
- la figure 3b représente une vue en coupe latérale schématique et partielle du vitrage multiple à diffusion variable par cristaux liquides de la figure 3a en cours de fabrication,
- la figure 3c représente une vue en coupe latérale schématique et partielle du vitrage multiple à diffusion variable par cristaux liquides de la figure 3a,
- la figure 4a représente une vue en coupe transversale schématique d'un quatrième mode de réalisation du vitrage multiple à diffusion variable par cristaux liquides selon l'invention,
- la figure 4b représente une vue schématique et partielle de dessus du vitrage multiple à diffusion variable par cristaux liquides de la figure 4a,
- la figure 5 représente une vue schématique de dessus d'un cinquième mode de réalisation du vitrage multiple à diffusion variable par cristaux liquides selon l'invention.

On précise que par un souci de clarté les différents éléments des objets représentés ne sont pas nécessairement reproduits à l'échelle.

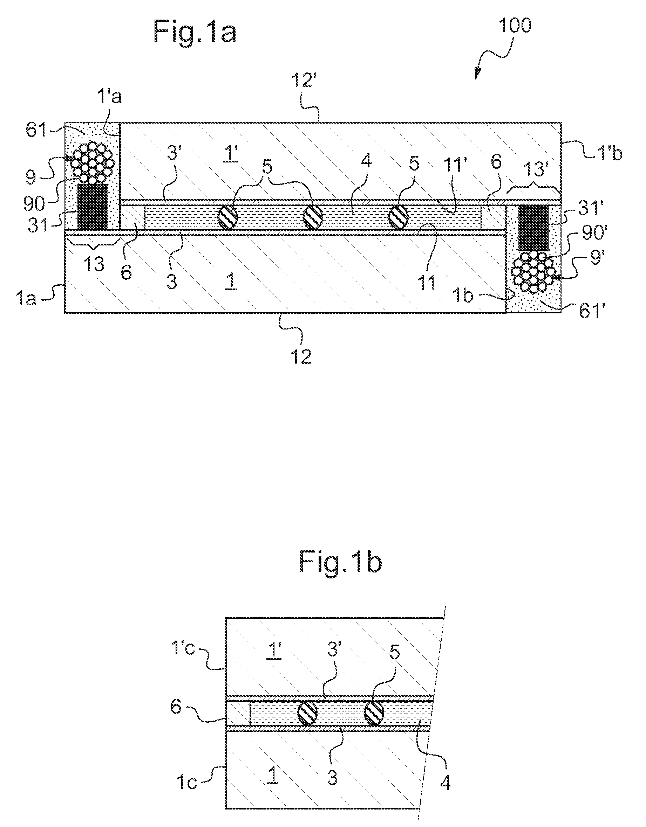

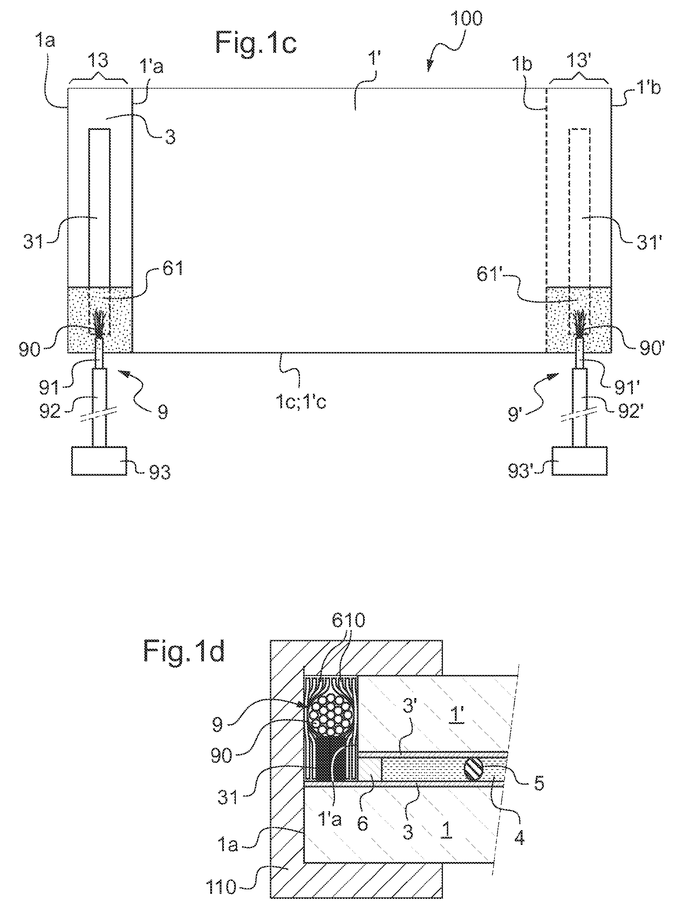

La figure 1 représente une vue en coupe transversale schématique d'un premier mode de réalisation du vitrage multiple à diffusion variable par cristaux liquides selon l'invention avec
- une première feuille de verre 1, rectangulaire - définissant quatre bords -, avec une face dite première face interne 11 et une autre face dite première face externe 12 et une tranche dite première tranche 1a à 1d,
- une deuxième feuille de verre, rectangulaire - définissant quatre bords -, avec une face dite deuxième face interne 11' et une autre face dite deuxième face externe 12' et une tranche dite deuxième tranche 1'a à 1'd.

La première feuille de verre 1 dépasse d'un bord de la deuxième tranche 1'a, par un premier bord 13 de la première face interne 11, dit premier bord dépassant 13. Par exemple, il s'agit d'un premier bord latéral (ou en variante longitudinal).

La deuxième feuille de verre 1' dépasse d'un bord de tranche de la première feuille de verre 1 b, par un bord de la deuxième face interne dit autre bord dépassant 13'. Par exemple, il s'agit du deuxième bord latéral (ou en variante longitudinal).

Le premier bord dépassant 13 et l'autre bord dépassant (ici opposé) sont obtenus par décalage des première et deuxième tranches 1 a, 1'a.

Les bords 1c, 1'c et les bords opposés 1d, 1'd sont visibles en figure 1c.

Sur chacune des première et deuxième feuilles de verre flotté 1 et 1' est disposée sur les faces internes 11, 11' une couche électriquement conductrice 3, 3' d'une épaisseur d'environ 20 à 400 nm, réalisée en oxyde d'indium et d'étain (ITO) par exemple. Les couches d'ITO ont une résistance électrique de surface comprise entre 5 Ω/□ et 300 Ω/□. Au lieu des couches réalisées en ITO, on peut également utiliser dans le même but d'autres couches d'oxyde électriquement conducteur ou des couches d'argent dont la résistance de surface est comparable.

La couche 4 de cristaux liquides, qui peut présenter une épaisseur d'environ 5 à 14 µm, est située entre les couches électrodes 3 et 4.

La couche 4 de cristaux liquides contient des espaceurs sphériques 5. Les espaceurs 5 sont constitués d'un polymère transparent. A titre d'exemple, le produit de Sekisui Chemical Co., Ltd, connu sous la désignation "Micropearl « SP » s'est avéré bien convenir comme espaceur, en polyméthacrylate de méthyle (PMMA).

Par ailleurs, pour la couche de cristaux liquides, on peut utiliser aussi des composés connus, par exemple les composés décrits dans le document US 5 691 795. Le composé de cristaux liquides de Merck Co., Ltd, commercialisé sous le nom commercial "Cyanobiphenyl Nematic Liquid Crystal E-31 LV" s'est également avéré convenir particulièrement bien. Dans le cas de ce mode de réalisation, ce produit est mélangé dans un rapport 10:2 avec une substance chirale, par exemple le 4-cyano-4'-(2-méthyl)butylbiphényle, et ce mélange est mélangé dans le rapport 10:0,3 avec un monomère, par exemple le 4,4'-bisacryloylbiphényle, et avec un initiateur d'UV, par exemple le méthyléther de benzoïne. Le mélange ainsi préparé est appliqué sur l'une des feuilles de verre revêtues. Après durcissement de la couche de cristaux liquides par irradiation à la lumière UV, il se forme un réseau polymère dans lequel les cristaux liquides sont incorporés.

Pour la couche de cristaux liquides, on peut utiliser des PDLC tel le composé 4-((4-Éthyle-2,6-difluorophényl)-éthinyl)-4'-propylbiphényl et 2-Fluor-4,4'-bis(trans-4-propylcyclohexyl)-biphenyl par exemple vendu par la société Merck sous la référence MDA-00-3506.

On choisit de réaliser une couche d'épaisseur de 10 µm, en particulier couche de PDLC.

Sur le bord, un joint de contact 6 sert en même temps à relier les feuilles de verre 1, 1' dotées des électrodes 3, 3' de manière ferme et permanente. Le joint de contact est en résine époxy.

En outre, ce vitrage 100 comprend de première et deuxième zones d'alimentation électrique :
- pour une première amenée de courant, une première bande électroconductrice 31 sous forme d'un clinquant souple en cuivre (couramment appelé « bus bar ») fixée sur la première électrode, le long du premier bord dépassant 13,
- pour une deuxième amenée de courant, une deuxième bande électroconductrice 31' sous forme d'un clinquant souple en cuivre fixée sur la deuxième électrode, le long de l'autre bord dépassant.

Le vitrage 100 comprend ensuite un câblage électrique avec deux câbles 9, 9' et donc deux entrées de câblage : une première entrée de câblage 90 qui est une âme sans gaine(s) d'un premier câble 9 soudée à la première amenée de courant 31 et une deuxième entrée de câblage 90' qui est l'âme sans gaine(s) d'un deuxième câble 9' soudée à la deuxième amenée de courant 31'.

La première entrée de câblage 90 est isolée par une matière d'isolation électrique 61 polymérique, ici choisie en EVA.

La deuxième entrée de câblage 90' est isolée par une matière d'isolation électrique 61' polymérique, ici choisie en EVA.

Comme montré en figure 1b, le long des deux autres bords adjacents, ici longitudinaux, toutes les tranches des verres et sont alignées.

La première entrée de câblage 90 et fixée dans une position déterminée unidirectionnelle, notamment linéaire, en sortie du vitrage voire à partir du dehors de la première entrée de câblage 90 avec la première matière d'isolation électrique 91.

On choisit des premier et deuxième câbles 9, 9' par exemple d'âmes 90, 90' de section égale à 0,6 mm², et de diamètre total avec la gaine interne 91, 91' de 2 mm. Le diamètre total avec la gaine externe 92, 92' est de 5,5 mm. Les câbles sont raccordés au secteur 93, 93' en sortie du vitrage 100.

Comme montré en figure 1d, on procède à l'isolation électrique de la première entrée de câblage 90 (respectivement de la deuxième entrée de câblage 90) on utilise la matière polymérique thermoplastique en EVA de préférence réticulable 610 par des agents tels que peroxyde organique, ceci sous forme de bandes - ou en variantes de billes -, .La largeur des bandes dépend de l'épaisseur des verres utilisés. On met par exemple des bandes d'EVA de 0,4 mm d'épaisseur pour recouvrir la première entrée du câble dénudé 90 (respectivement la deuxième entrée 90').

On utilise ensuite un moule 110 de surface interne, dite de moulage. Le moule 110, de section transversale (sensiblement) en C, est :
- en appui sur le vitrage par les faces externes principales
- en butée contre le chant du verre 1a,ou en variante avec un espace pour recouvrir le chant 1a de l'EVA moulé (par des éventuels des décrochements internes du moule).

Le moule 110 présente une surface (interne) de moulage non adhésive à l'EVA, par exemple en téflon.

Le moule 110 est ouvert latéralement sur un côté pour sortir le premier câble 9. Pour contenir l'EVA, les bords latéraux du moule sont fermés ou obturés notamment par du tissu ou du scotch (non visible).

Le moule 110 en variante présente une paroi latérale percée pour la sortie du premier câble.

Pour la deuxième entrée de câblage 90', on utilise une pièce de moulage similaire et on procède de la même façon.

On place l'ensemble vitrage et moule(s) dans une simple poche étanche au vide. On met sous vide primaire, afin de dégazer l'EVA (élimination des bulles ...) et on chauffe au-dessus de 100°C pour fluidifier la matière polymérique EVA pour que la matière EVA épouse la surface de moulage et pour débuter la réticulation de l'EVA.

Avec cet EVA, on forme en même temps le moyen d'étanchéité à l'eau liquide des première et deuxième entrées de câblage 90, 90'. Comme montré en figure 1c, l'EVA n'est pas présent en dehors de ces zones.

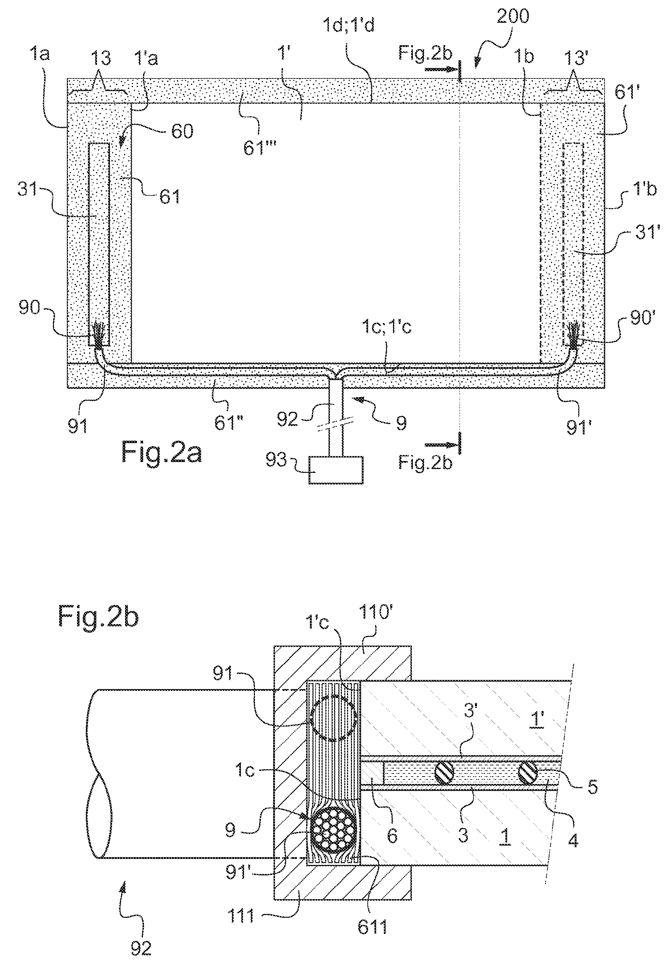

La figure 2a représente une vue schématique de dessus d'un deuxième mode de réalisation du vitrage multiple à diffusion variable par cristaux liquides 200 selon l'invention.

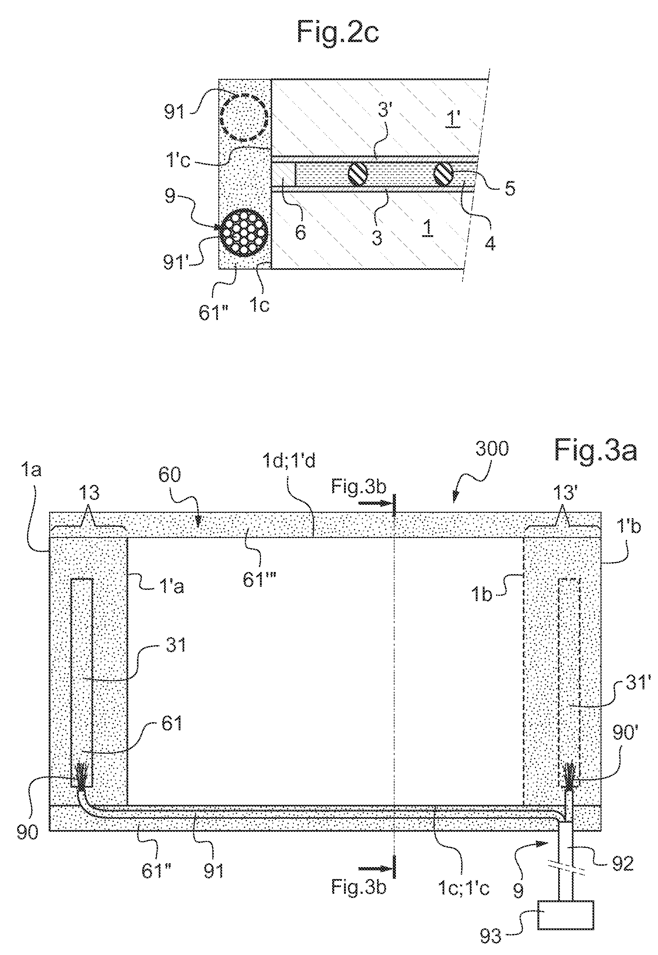

Le vitrage 200 diffère du vitrage 100 d'abord par la formation d'un joint d'étanchéité à l'eau liquide en EVA ceinturant le vitrage, étanchéité à l'eau liquide :
- de la première amenée de courant 31 et de la première électrode dans cette zone d'alimentation, joint 61 remplissant l'ensemble du premier bord dépassant 13, (sur toute la longueur et sur largeur)
- de la deuxième amenée de courant 31' et de la deuxième électrode dans cette zone d'alimentation, joint 61' remplissant l'ensemble bord dépassant 13, (sur toute la longueur et sur largeur),
- d'un premier bord longitudinal, joint 61" le long du chant du vitrage 1c, (voire aussi la figure 2c),
- d'un deuxième bord longitudinal, joint 61"' le long du chant du vitrage 1d.

En outre, le câblage 9 comprend un seul câble bi-brins 90, 90' le long du premier bord longitudinal du vitrage 200. L'EVA immobilise les deux gaines internes 91, 91'. Le câble électrique est fixé dans une position déterminée unidirectionnelle, linéaire en sortie du vitrage. Le câble sort du vitrage, dans une unique zone avant raccordement au secteur 93.

L'EVA moulé 61 présente une surface externe lisse.

On a qualifié l'étanchéité à l'eau liquide par la détermination du deuxième chiffre de l'indice de protection (IP).

L'indice de protection (IP) est un standard international de la Commission Electrotechnique Internationale. Cet indice classe le niveau de protection qu'offre un matériau aux intrusions de corps solides et liquides. Le format de l'indice, donné par la norme CEI 60529, est IP XY, où le deuxième chiffre Y renseigne sur le niveau de protection contre l'eau avec les conditions résumées dans le tableau 1 ci-dessous.

**Tableau 1**

| Indice | 2^{ème} chiffre pour la Protection contre l'eau |
|---|---|
| 0 | Aucune protection |
| 1 | Protégé contre les chutes verticales de gouttes d'eau |
| 2 | Protégé contre les chutes de gouttes d'eau jusqu'à 15° de la verticale |
| 3 | Protégé contre l'eau en pluie jusqu'à 60° de la verticale |
| 4 | Protégé contre les projections d'eau de toutes directions |
| 5 | Protégé contre les jets d'eau de toutes directions à la lance |
| 6 | Protégé contre les paquets de mer |
| 7 | Protégé contre les effets de l'immersion |

Ce coefficient est défini par exemple dans les normes DIN40050, IEC 529, BS 5490.

Ce vitrage 200 passe le standard IPX7, c'est-à-dire que le vitrage a été mis en fonctionnement en immersion totale dans l'eau (test décrit par la norme IEC 60335-1 :2002). Il s'agit d'une immersion temporaire entre 0,15 m et 1 m. Plus précisément l'essai est effectué en immergeant complètement le vitrage dans l'eau en position de service comme indiqué par le constructeur, de manière à ce que les conditions suivantes soient observées :
a) le vitrage est à 1 m de profondeur en position horizontale et alimenté électriquement,
b) la durée de l'essai est de 30 min,
c) la température de l'eau ne doit pas différer de celle du vitrage de plus de 5 K.

Les entrées de câble 90, 90' noyées ont aussi une meilleure tenue. On peut valider la résistance à l'arrachement du câble par la méthode suivante.

Une marque est faite sur le câble à la sortie du moulage pendant qu'il est soumis à une force de traction de 100 N (10 kg) à une distance d'environ 20 mm de l'entrée de câble. Le câble est soumis à une traction de 100 N pendant 1s sans secousse dans la direction la plus défavorable. L'essai est effectué 25 fois. Puis le câble est soumis à un couple de torsion de 0,35 N.m appliqué le plus près possible de l'entrée du vitrage pendant 1 min. Pendant les essais le câble ne doit pas être endommagé, c'est à-dire sectionné par la torsion. La force de traction est de nouveau appliquée et on ne doit pas avoir de déplacement longitudinal du câble de plus de 2 mm.

La figure 2b représente une vue en coupe latérale schématique et partielle du vitrage multiple à diffusion variable par cristaux liquides de la figure 2a en cours de fabrication.

Le moule 110' diffère du moule 100 en ce qu'il ceinture tout le pourtour du vitrage et on place autant de bandes d'EVA que nécessaire et de bandes d'EVA 611 le long des bords longitudinaux dans l'espace entre la surface de moulage et les tranches 1c, 1'c.

Le moule 110' est en outre percé de trou(s) 111 sur sa paroi en regard du chant du vitrage pour sortir le câble.

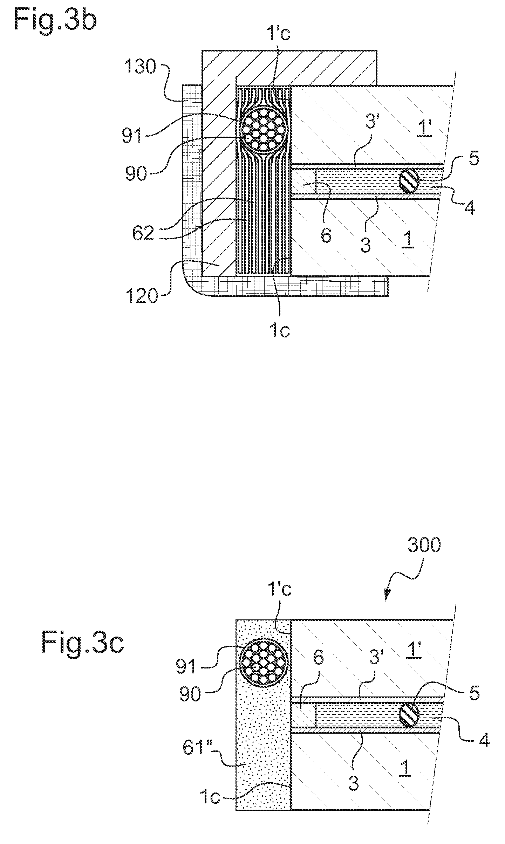

La figure 3a représente une vue schématique de dessus d'un troisième mode de réalisation du vitrage multiple à diffusion variable par cristaux liquides 300.

Le vitrage 300 diffère du vitrage 200 par le positionnement du cable bi brins et son raccordement au secteur 93 sur un coin Comme montré en figure 3b, le procédé de fabrication présenté diffère de la deuxième réalisation en ce que le moule 120 de section en L, est ouvert, donc seulement sur un bord de la face externe principale de la feuille 1'. Une enveloppe 130 (bande de tissu adhésivée par exemple ou fixée par des scotchs) est disposée sur un bord de la face externe principale de la feuille 1 et s'étend sur le moule 120 pour le capoter.

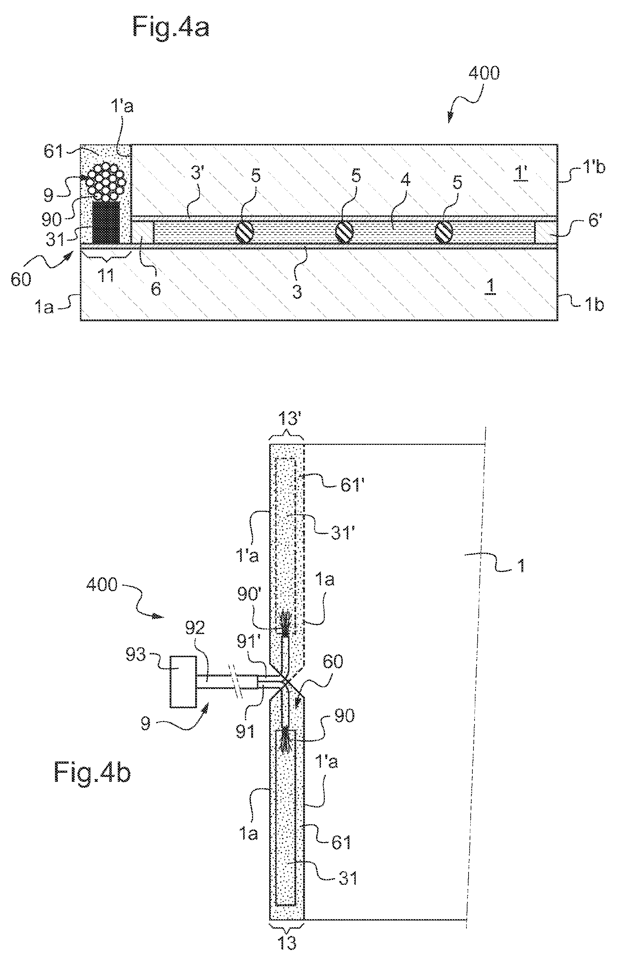

La figure 4a représente une vue en coupe transversale schématique d'un quatrième mode de réalisation du vitrage 400 multiple à diffusion variable par cristaux liquides selon l'invention.

Le vitrage 400 diffère du vitrage 100 en ce que le premier bord dépassant 13 est obtenu par découpe partielle de la deuxième tranche 1'a et l'autre bord dépassant 13' est obtenu par découpe partielle de la première tranche 1a.

Le premier bord dépassant 13 et l'autre bord dépassant 13' sont sur un seul bord longitudinal comme montré en figure 4b.

Ces bords 13, 13' sont entièrement couverts par l'EVA 61, 61' protégeant amenées de courant et entrées de câblage. Le raccordement au secteur 93 se fait au milieu.

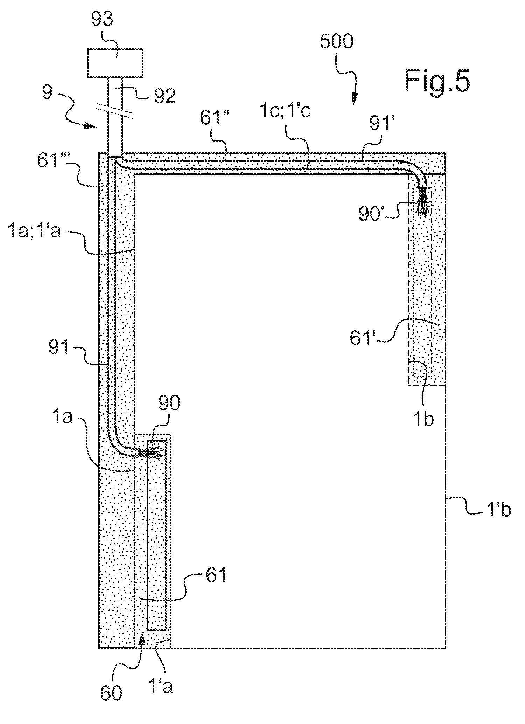

La figure 5 représente une vue schématique de dessus d'un cinquième mode de réalisation du vitrage 500 multiple à diffusion variable par cristaux liquides selon l'invention.

Le vitrage 500 diffère du vitrage 100 en ce que le premier bord dépassant 13 est obtenu par découpe partielle de la deuxième tranche 1'a et l'autre bord dépassant 13' est obtenu par découpe partielle de la première tranche 1a.

Le premier bord dépassant 13 et l'autre bord dépassant 13' sont sur des bords longitudinaux 1 a, 1'b et ne sont pas en vis-à-vis.

Ces bords 13, 13' sont entièrement couverts par l'EVA 61, 61'. Le raccordement au secteur 93 se fait au milieu.

Le câblage est une seul câble bi-brins 9 immobilisé par de l'EVA 61", 61"' contre la tranche du premier bord longitudinal et d'un deuxième bord latéral 1c, 1'c.

## Revendications

1. Vitrage multiple à diffusion variable par cristaux liquides (100 à 500), avec un chant (1a à 1'd), le vitrage multiple présentant :
- une première feuille de verre (1) avec une face dite première face interne (11) et une autre face dite première face externe (12) et une tranche dite première tranche (1a à 1d),
- une deuxième feuille de verre (1') avec une face dite deuxième face interne (11') et une autre face dite deuxième face externe (12') et une tranche dite deuxième tranche (1'a à 1'd),
les première et deuxième feuilles de verre (1, 1') étant maintenues par un joint dit de contact (6),
- des première et deuxième électrodes (3, 3') respectivement sur les première et deuxième faces internes (11, 11'), sous forme de couches électriquement conductrices transparentes, première et deuxième électrodes (3, 3') dotées respectivement de première et deuxième zones d'alimentation électrique (31, 31'),
- et, sur les première et deuxième électrodes (3, 3'), une couche (4) de cristaux liquides dans une matière polymérique alternant de manière réversible entre un état transparent et un état translucide par application d'un champ électrique alternatif, couche (4) d'épaisseur comprise entre 5 et 15 µm en incluant 5 µm et excluant 15 µm, couche (4) incorporant des espaceurs (5),
- la première feuille de verre (1) dépassant d'un bord de la deuxième tranche (1'a), par un premier bord (13) de la première face interne (11), dit premier bord dépassant, et comportant la première zone d'alimentation électrique (31),
- un câblage électrique (9, 9') avec une première entrée de câblage (90) qui est l'âme d'un premier câble, donc une zone de câble sans gaine, dans la première zone d'alimentation électrique (31) et une deuxième entrée de câblage (90'), qui est l'âme d'un câble, donc une zone de câble sans gaine, dans la deuxième zone d'alimentation électrique (31'),
- une première matière d'isolation électrique (61), isolant électriquement la première entrée de câblage (90) et étant une matière polymérique, et éventuellement une deuxième matière d'isolation électrique isolant électriquement la deuxième entrée de câblage (91) et étant un matière polymérique.

2. Vitrage multiple à diffusion variable par cristaux liquides (100 à 500) selon la revendication 1, **caractérisé en ce que** le câblage électrique (9, 9') comprend un premier câble électrique (9) comportant la première entrée de câblage (90) et qui, sur au moins une partie de sa longueur située au-delà de la première entrée du câblage (90), est le long du premier bord dépassant (13) et/ou dans une autre zone dépassante de la première feuille de verre (1).

3. Vitrage multiple à diffusion variable par cristaux liquides (400, 500) selon l'une des revendications précédentes, **caractérisé en ce que** le câblage électrique (9, 9') comprend un premier câble électrique (9) comportant la première entrée de câblage (90) et qui, sur au moins une partie de sa longueur située au-delà de la première entrée du câblage (90), comporte une gaine (91), recouverte par une matière polymérique de maintien (61), matière notamment étanche à l'eau liquide voire vapeur et/ou isolante électrique, de préférence identique voire formant la première matière d'isolation électrique (61), et la gaine (91) étant de préférence figée par la matière de maintien (61).

4. Vitrage multiple à diffusion variable par cristaux liquides (100, 200, 300, 400, 500) selon l'une des revendications précédentes, **caractérisé en ce que** le câblage électrique (9, 9') comporte un premier câble électrique (9) comportant la première entrée de câblage (90) et étant fixé dans une position déterminée unidirectionnelle, en sortie du vitrage voire à partir du dehors de la première entrée de câblage (90) avec la première matière d'isolation électrique (61).

5. Vitrage multiple à diffusion variable par cristaux liquides (200, 300, 400, 500) selon l'une des revendications précédentes, **caractérisé en ce que** le câblage électrique (9) sort du vitrage dans une unique zone, de préférence le câblage est constitué d'un unique premier câble électrique (9) qui est bi-brins (90, 90').

6. Vitrage multiple à diffusion variable par cristaux liquides (100, 200, 300, 400, 500) selon l'une des revendications précédentes, **caractérisé en ce que** la première zone d'alimentation électrique comprend une première amenée de courant (31) sur laquelle est fixée la première entrée de câblage (90) et qui est protégée par la première matière d'isolation électrique (61).

7. Vitrage multiple à diffusion variable par cristaux liquides (100, 200, 300, 400, 500) selon l'une des revendications précédentes, **caractérisé en ce qu'**il comprend un joint d'étanchéité (60) à l'eau liquide, voire vapeur, et formé par une matière polymérique d'étanchéité (61 à 61"'), notamment isolante électrique, le joint d'étanchéité (60) étant agencé pour l'étanchéité de la première entrée de câblage (90), et de préférence d'une éventuelle première amenée de courant (31), et de la première électrode (3).

8. Vitrage multiple à diffusion variable par cristaux liquides (100, 200, 300, 400, 500) selon la revendication 7, **caractérisé en ce que** la matière d'étanchéité (61 à 61"') forme la première matière d'isolation électrique (61).

9. Vitrage multiple à diffusion variable par cristaux liquides (100, 200, 300, 400, 500) selon l'une des revendications 7 ou 8, **caractérisé en ce que** le joint d'étanchéité (60) est le long d'au moins un bord de la première tranche (1a) et/ou le long du premier bord dépassant (13).

10. Vitrage multiple à diffusion variable par cristaux liquides (200) selon l'une des revendications 7 à 9, **caractérisé en ce que** le joint d'étanchéité (60) est sur tout le pourtour du vitrage et le joint d'étanchéité (60) borde éventuellement le câblage électrique (9, 91, 91').

11. Vitrage multiple à diffusion variable par cristaux liquides (100, 200, 300, 400, 500) selon l'une des revendications 7 à 10, **caractérisé en ce que** la matière d'étanchéité (61 à 61"') qui forme éventuellement la première matière d'isolation électrique (61) et/ou qui forme éventuellement une matière de maintien du câblage électrique (61") est réticulée.

12. Vitrage multiple à diffusion variable par cristaux liquides (100, 200, 300, 400, 500) selon l'une des revendications 1 à 11, **caractérisé en ce que** la première matière d'isolation électrique (61) et/ou la matière d'étanchéité à l'eau (61 à 61"') et/ou une matière de maintien du câblage électrique (61") est à base d'éthylène-vinyl acétate notamment réticulée.

13. Vitrage multiple à diffusion variable par cristaux liquides (100, 200, 300, 400, 500) selon l'une des revendications 1 à 11, **caractérisé en ce que** la première matière d'isolation électrique (61) et/ou la matière d'étanchéité à l'eau (61 à 61"') et/ou une matière de maintien du câblage électrique (61") est en silicone.

14. Vitrage multiple à diffusion variable par cristaux liquides (100, 200, 300, 400, 500) selon l'une des revendications précédentes, **caractérisé en ce que** la première matière d'isolation électrique (61) et/ou la matière d'étanchéité à l'eau (61 à 61"') du joint (60) qui forme éventuellement la première matière d'isolation électrique (61) et/ou une matière de maintien du câblage électrique (61") présente une surface dite externe, orientée vers l'extérieur du vitrage, qui est moulée.

15. Vitrage multiple à diffusion variable par cristaux liquides (100, 200, 300, 400, 500) selon l'une des revendications précédentes, **caractérisé en ce que** le premier bord dépassant (13) est obtenu par décalage des première et deuxième tranches (1a, 1'a) ou par découpe partielle de la deuxième tranche (1'a).

16. Vitrage multiple à diffusion variable par cristaux liquides (400, 500) selon l'une des revendications 1 à 15, **caractérisé en ce que** le premier bord dépassant (13) s'étend sur une partie limitée du premier bord de la première face interne (11), le dépassement étant obtenu par une découpe partielle de la deuxième tranche (1'a) et **en ce que** de préférence la deuxième feuille de verre (1') dépasse d'un bord de la première tranche (1a), par un bord de la deuxième face interne (11') dit autre bord dépassant (13'), comportant la deuxième zone d'alimentation électrique, et s'étendant sur une partie limitée d'un bord de la deuxième face interne, le dépassement étant obtenu par une découpe partielle de la première tranche (1a), et de préférence le premier bord dépassant et l'autre bord dépassant sont sur un même bord du vitrage.

## Patentansprüche

1. Mehrfachverglasung mit veränderlicher Streuung durch Flüssigkristalle (100 bis 500), mit einer Kante (1a bis 1'd), wobei die Mehrfachverglasung aufweist:
- eine erste Glasscheibe (1) mit einer Seite, sogenannten ersten Innenseite (11), und einer weiteren Seite, sogenannten ersten Außenseite (12), und einer Kante, sogenannten ersten Kante (1a bis 1d),
- eine zweite Glasscheibe (1') mit einer Seite, sogenannten zweiten Innenseite (11'), und einer weiteren Seite, sogenannten zweiten Außenseite (12'), und einer Kante, sogenannten zweiten Kante (1'a bis 1'd), wobei die erste und die zweite Glasscheibe (1, 1') durch eine sogenannte Kontaktdichtung (6) gehalten sind,
- eine erste und eine zweite Elektrode (3, 3') auf der ersten bzw. der zweiten Innenseite (11, 11'), in Form von elektrisch leitenden, transparenten Schichten, erste und zweite Elektrode (3, 3'), die mit einem ersten bzw. einem zweiten Stromversorgungsbereich (31, 31') ausgestattet sind, und
- auf der ersten und der zweiten Elektrode (3, 3') eine Schicht (4) aus Flüssigkristallen in einem Polymermaterial, die durch Anlegen eines elektrischen Wechselfeldes zwischen einem transparenten Zustand und einem transluzenten Zustand reversibel wechselt, Schicht (4) mit einer Dicke im Bereich zwischen 5 und 15 µm, einschließlich 5 µm und ausschließlich 15 µm, Schicht (4), die Abstandhalter (5) enthält,
- wobei die erste Glasscheibe (1) über einen Rand der zweiten Kante (1'a) mit einem ersten Rand (13), sogenannten ersten überstehenden Rand, der ersten Innenseite (11) übersteht und den ersten Stromversorgungsbereich (31) umfasst,
- eine elektrische Verdrahtung (9, 9') mit einem ersten Verdrahtungseingang (90), welcher die Seele eines ersten Kabels, also ein mantelloser Kabelbereich, in dem ersten Stromversorgungsbereich (31) ist, und einem zweiten Verdrahtungseingang (90'), welcher die Seele eines Kabels, also ein mantelloser Kabelbereich, in dem zweiten Stromversorgungsbereich (31') ist,
- ein erstes elektrisches Isolationsmaterial (61), das den ersten Verdrahtungseingang (90) elektrisch isoliert und das ein Polymermaterial ist, sowie eventuell ein zweites elektrisches Isolationsmaterial, das den zweiten Verdrahtungseingang (91) elektrisch isoliert und das ein Polymermaterial ist.

2. Mehrfachverglasung mit veränderlicher Streuung durch Flüssigkristalle (100 bis 500), nach Anspruch 1, **dadurch gekennzeichnet, dass** die elektrische Verdrahtung (9, 9') ein erstes elektrisches Kabel (9) umfasst, das den ersten Verdrahtungseingang (90) umfasst und das über wenigstens einen Teil seiner Länge, der jenseits des ersten Verdrahtungseingangs (90) gelegen ist, sich entlang des ersten überstehenden Randes (13) und/oder in einem anderen überstehenden Bereich der ersten Glasscheibe (1) befindet.

3. Mehrfachverglasung mit veränderlicher Streuung durch Flüssigkristalle (400, 500), nach einem der vorhergehenden Ansprüche, **dadurch gekennzeichnet, dass** die elektrische Verdrahtung (9, 9') ein erstes elektrisches Kabel (9) umfasst, das den ersten Verdrahtungseingang (90) umfasst und das über wenigstens einen Teil seiner Länge, der jenseits des ersten Verdrahtungseingangs (90) gelegen ist, einen Mantel (91) umfasst, der mit einem polymeren Haltematerial (61) überzogen ist, Material, das insbesondere gegenüber flüssigem Wasser, sogar Dampf dicht und/oder elektrisch isolierend ist, vorzugsweise identisch ist, sogar das erste elektrische Isolationsmaterial (61) bildet, und wobei der Mantel (91) vorzugsweise durch das Haltematerial (61) festgelegt ist.

4. Mehrfachverglasung mit veränderlicher Streuung durch Flüssigkristalle (100, 200, 300, 400, 500), nach einem der vorhergehenden Ansprüche, **dadurch gekennzeichnet, dass** die elektrische Verdrahtung (9, 9') ein erstes elektrisches Kabel (9) umfasst, das den ersten Verdrahtungseingang (90) umfasst und das in einer bestimmten unidirektionalen Position am Ausgang der Verglasung, sogar ab dem Äußeren des ersten Verdrahtungseingangs (90) mit dem ersten elektrischen Isolationsmaterial (61) fixiert ist.

5. Mehrfachverglasung mit veränderlicher Streuung durch Flüssigkristalle (200, 300, 400, 500), nach einem der vorhergehenden Ansprüche, **dadurch gekennzeichnet, dass** die elektrische Verdrahtung (9) in einem einzigen Bereich aus der Verglasung austritt, wobei die Verdrahtung vorzugsweise von einem einzigen ersten elektrischen Kabel (9), das zweiadrig (90, 90') ist, gebildet ist.

6. Mehrfachverglasung mit veränderlicher Streuung durch Flüssigkristalle (100, 200, 300, 400, 500), nach einem der vorhergehenden Ansprüche, **dadurch gekennzeichnet, dass** der erste Stromversorgungsbereich eine erste Stromzuführung (31) umfasst, an der der erste Verdrahtungseingang (90) fixiert ist und die durch das erste elektrische Isolationsmaterial (61) geschützt ist.

7. Mehrfachverglasung mit veränderlicher Streuung durch Flüssigkristalle (100, 200, 300, 400, 500), nach einem der vorhergehenden Ansprüche, **dadurch gekennzeichnet, dass** sie eine Dichtung (60) zur Abdichtung gegenüber flüssigem Wasser, sogar Dampf umfasst, die durch ein polymeres Dichtungs- (61 bis 61'"), insbesondere elektrisches Isolationsmaterial gebildet ist, wobei die Dichtung (60) zur Abdichtung des ersten Verdrahtungseingangs (90) und vorzugsweise einer eventuellen ersten Stromzuführung (31) und der ersten Elektrode (3) eingerichtet ist.

8. Mehrfachverglasung mit veränderlicher Streuung durch Flüssigkristalle (100, 200, 300, 400, 500), nach Anspruch 7, **dadurch gekennzeichnet, dass** das Dichtungsmaterial (61 bis 61"') das erste elektrische Isolationsmaterial (61) bildet.

9. Mehrfachverglasung mit veränderlicher Streuung durch Flüssigkristalle (100, 200, 300, 400, 500), nach einem der Ansprüche 7 oder 8, **dadurch gekennzeichnet, dass** die Dichtung (60) sich entlang wenigstens eines Randes der ersten Kante (1a) und/oder entlang des ersten überstehenden Randes (13) befindet.

10. Mehrfachverglasung mit veränderlicher Streuung durch Flüssigkristalle (200), nach einem der Ansprüche 7 bis 9, **dadurch gekennzeichnet, dass** die Dichtung (60) über den gesamten Umfang der Verglasung vorhanden ist und die Dichtung (60) eventuell die elektrische Verdrahtung (9, 91, 91') einfasst.

11. Mehrfachverglasung mit veränderlicher Streuung durch Flüssigkristalle (100, 200, 300, 400, 500), nach einem der Ansprüche 7 bis 10, **dadurch gekennzeichnet, dass** das Dichtungsmaterial (61 bis 61"'), das eventuell das erste elektrische Isolationsmaterial (61) bildet und/oder das eventuell ein Material zum Halten der elektrischen Verdrahtung (61") bildet, vernetzt ist.

12. Mehrfachverglasung mit veränderlicher Streuung durch Flüssigkristalle (100, 200, 300, 400, 500), nach einem der Ansprüche 1 bis 11, **dadurch gekennzeichnet, dass** das erste elektrische Isolationsmaterial (61) und/oder das Material zur Abdichtung gegenüber Wasser (61 bis 61"') und/oder ein Material zum Halten der elektrischen Verdrahtung (61") auf der Basis von insbesondere vernetztem Ethylenvinylacetat ist.

13. Mehrfachverglasung mit veränderlicher Streuung durch Flüssigkristalle (100, 200, 300, 400, 500), nach einem der Ansprüche 1 bis 11, **dadurch gekennzeichnet, dass** das erste elektrische Isolationsmaterial (61) und/oder das Material zur Abdichtung gegenüber Wasser (61 bis 61"') und/oder ein Material zum Halten der elektrischen Verdrahtung (61") aus Silikon besteht.

14. Mehrfachverglasung mit veränderlicher Streuung durch Flüssigkristalle (100, 200, 300, 400, 500), nach einem der vorhergehenden Ansprüche, **dadurch gekennzeichnet, dass** das erste elektrische Isolationsmaterial (61) und/oder das Material zur Abdichtung gegenüber Wasser (61 bis 61"') der Dichtung (60), das eventuell das erste elektrische Isolationsmaterial (61) und/oder ein Material zum Halten der elektrischen Verdrahtung (61") bildet, eine zur Außenseite der Verglasung gerichtete, sogenannte Außenfläche aufweist, die geformt ist.

15. Mehrfachverglasung mit veränderlicher Streuung durch Flüssigkristalle (100, 200, 300, 400, 500), nach einem der vorhergehenden Ansprüche, **dadurch gekennzeichnet, dass** der erste überstehende Rand (13) durch Versetzen der ersten und der zweiten Kante (1a, 1'a) oder durch teilweises Ausschneiden der zweiten Kante (1'a) erhalten wird.

16. Mehrfachverglasung mit veränderlicher Streuung durch Flüssigkristalle (400, 500), nach einem der Ansprüche 1 bis 15, **dadurch gekennzeichnet, dass** der erste überstehende Rand (13) sich über einen begrenzten Teil des ersten Randes der ersten Innenseite (11) erstreckt, wobei der Überstand durch ein teilweises Ausschneiden der zweiten Kante (1'a) erhalten wird, und dass vorzugsweise die zweite Glasscheibe (1') von einem Rand der ersten Kante (1a) mit einem Rand der zweiten Innenseite (11'), sogenannten anderen überstehenden Rand (13'), übersteht, der den zweiten Stromversorgungsbereich umfasst und sich über einen begrenzten Teil eines Randes der zweiten Innenseite erstreckt, wobei der Überstand durch ein teilweises Ausschneiden der ersten Kante (1a) erhalten wird, und wobei vorzugsweise der erste überstehende Rand und der andere überstehende Rand an einem gleichen Rand der Verglasung gelegen sind.

## Claims

1. Multiple glazing with variable liquid-crystal-induced scattering (100 to 500), with an edge face (1a to 1'd), the multiple glazing having:
- a first glass sheet (1) with a face referred to as the first inner face (11) and another face referred to as the first outer face (12) and an edge referred to as the first edge (1a to 1d),
- a second glass sheet (1') with a face referred to as the second inner face (11') and another face referred to as the second outer face (12') and an edge referred to as the second edge (1'a to 1'd),
the first and second glass sheets (1, 1') being held by a gasket referred to as the contact gasket (6),
- first and second electrodes (3, 3') respectively on the first and second inner faces (11, 11'), in the form of transparent electrically conductive layers, which first and second electrodes (3, 3') are provided respectively with first and second electricity supply zones (31, 31'),
- and, on the first and second electrodes (3, 3'), a layer (4) of liquid crystals in a polymer material alternating reversibly between a transparent state and a translucent state by application of an alternating electric field, which layer (4) has a thickness between 5 and 15 µm, including 5 µm and excluding 15 µm, which layer (4) incorporates spacers (5),
- the first glass sheet (1) protruding from one side of the second edge (1'a) by a first side (13) of the first inner face (11), referred to as the first protruding side, and comprising the first electricity supply zone (31),
- electrical cabling (9, 9') with a first cabling input (90), which is the core of a first cable, therefore a sheathless cable zone, in the first electricity supply zone (31) and a second cabling input (90'), which is the core of a cable, therefore a sheathless cable zone, in the second electricity supply zone (31'),
- a first electrically insulating material (61) electrically insulating the first cabling input (90), and being a polymer material, and optionally a second electrically insulating material electrically insulating the second cabling input (91), and being a polymer material.

2. Multiple glazing with variable liquid-crystal-induced scattering (100 to 500) according to Claim 1, **characterized in that** the electrical cabling (9, 9') comprises a first electrical cable (9) comprising the first cabling input (90) and which, over at least one portion of its length located beyond the first cabling input (90), is along the first protruding side (13) and/or in another protruding zone of the first glass sheet (1).

3. Multiple glazing with liquid-crystal-induced variable scattering (400, 500) according to one of the preceding claims, **characterized in that** the electrical cabling (9, 9') comprises a first electrical cable (9) comprising the first cabling input (90) and which, over at least one portion of its length located beyond the first cabling input (90), comprises a sheath (91), covered with a supporting polymer material (61), which material is in particular impermeable to liquid water or even steam and/or is electrically insulating, preferably identical to or even forming the first electrically insulating material (61), and the sheath (91) preferably being solidified by the support material (61).

4. Multiple glazing with variable liquid-crystal-induced scattering (100, 200, 300, 400, 500) according to one of the preceding claims, **characterized in that** the electrical cabling (9, 9') comprises a first electrical cable (9) comprising the first cabling input (90) and being fixed in a given unidirectional position, leaving the glazing or even starting from outside of the first cabling input (90) with the first electrically insulating material (61).

5. Multiple glazing with variable liquid-crystal-induced scattering (200, 300, 400, 500) according to one of the preceding claims, **characterized in that** the electrical cabling (9) leaves the glazing in a single zone, preferably the cabling consists of a single first electrical cable (9) which is a two-wire (90, 90') cable.

6. Multiple glazing with variable liquid-crystal-induced scattering (100, 200, 300, 400, 500) according to one of the preceding claims, **characterized in that** the first electricity supply zone comprises a first current feed (31) to which the first cabling input (90) is attached and which is protected by the first electrically insulating material (61).

7. Multiple glazing with variable liquid-crystal-induced scattering (100, 200, 300, 400, 500) according to one of the preceding claims, **characterized in that** it comprises a seal (60) impermeable to liquid water or even to steam, and formed by an impermeable polymer material (61 to 61"'), in particular that is electrically insulating, the impermeable seal (60) being arranged for the impermeability of the first cabling input (90) and preferably of an optional first current feed (31), and of the first electrode (3).

8. Multiple glazing with variable liquid-crystal-induced scattering (100, 200, 300, 400, 500) according to Claim 7, **characterized in that** the impermeable material (61 to 61"') forms the first electrically insulating material (61).

9. Multiple glazing with variable liquid-crystal-induced scattering (100, 200, 300, 400, 500) according to either of Claims 7 and 8, **characterized in that** the impermeable seal (60) is along at least one side of the first edge (1a) and/or along the first protruding side (13).

10. Multiple glazing with variable liquid-crystal-induced scattering (200) according to one of Claims 7 to 9, **characterized in that** the water-impermeable seal (60) is over the entire perimeter of the glazing and the impermeable seal (60) optionally borders the electrical cabling (9, 91, 91').

11. Multiple glazing with variable liquid-crystal-induced scattering (100, 200, 300, 400, 500) according to one of Claims 7 to 10, **characterized in that** the impermeable material (61 to 61"') which optionally forms the first electrically insulating material (61) and/or which optionally forms a support material for the electrical cabling (61 ") is crosslinked.

12. Multiple glazing with variable liquid-crystal-induced scattering (100, 200, 300, 400, 500) according to one of Claims 1 to 11, **characterized in that** the first electrically insulating material (61) and/or the water-impermeable material (61 to 61"') and/or a support material for the electrical cabling (61") is based on ethylene/vinyl acetate, in particular which is crosslinked.

13. Multiple glazing with variable liquid-crystal-induced scattering (100, 200, 300, 400, 500) according to one of Claims 1 to 11, **characterized in that** the first electrically insulating material (61) and/or the water-impermeable material (61 to 61"') and/or a support material for the electrical cabling (61") is made of silicone.

14. Multiple glazing with variable liquid-crystal-induced scattering (100, 200, 300, 400, 500) according to one of the preceding claims, **characterized in that** the first electrically insulating material (61) and/or the water-impermeable material (61 to 61"') of the seal (60) which optionally forms the first electrically insulating material (61) and/or a support material for the electrical cabling (61 ") has a surface referred to as the outer surface, oriented toward the outside of the glazing, which is molded.

15. Multiple glazing with variable liquid-crystal-induced scattering (100, 200, 300, 400, 500) according to one of the preceding claims, **characterized in that** the first protruding side (13) is obtained by offsetting the first and second edge faces (1a, 1'a) or by partial cutting of the second edge face (1'a).

16. Multiple glazing with variable liquid-crystal-induced scattering (400, 500) according to one of Claims 1 to 15, **characterized in that** the first protruding side (13) extends over a limited portion of the first side of the first inner face (11), the protrusion being obtained by partial cutting of the second edge face (1'a) and **in that** preferably the second glass sheet (1') protrudes over one side of the first edge face (1a), by a side of the second inner face (11') referred to as the other protruding side (13'), comprising the second electricity supply zone, and extending over a limited portion of one side of the second inner face, the protrusion being obtained by partial cutting of the first edge face (1a), and preferably the first protruding side and the other protruding side are on one and the same side of the glazing.
